Europäisches Patentamt

European Patent Office

Office européen des brevets

(11) Publication number: **0 417 573 A2**

## EUROPEAN PATENT APPLICATION

(21) Application number: **90116782.5**

(22) Date of filing: **31.08.90**

(51) Int. Cl.⁵: **G02F 1/1339, G02F 1/135**

(30) Priority: **11.09.89 US 405706**

(43) Date of publication of application:
**20.03.91 Bulletin 91/12**

(84) Designated Contracting States:
**DE FR GB NL**

(71) Applicant: **HUGHES AIRCRAFT COMPANY**
**7200 Hughes Terrace**
**Los Angeles, CA 90045-0066(US)**

(72) Inventor: **Lackner, Anna M.**

10379 W. Eastborne Avenue
Los Angeles, CA 90024(US)
Inventor: **Margerum, J. David**
5433 Rozie Avenue
Woodland Hills, CA 91367(US)
Inventor: **Smith, Willis H., Jr.**
4056 Greenwood Avenue
Newbury Park, CA 91320(US)

(74) Representative: **Kuhnen, Wacker & Partner**
**Schneggstrasse 3-5 Postfach 1553**
**W-8050 Freising(DE)**

(54) **Spacing and sealing arrangement for liquid crystal light valve.**

(57) Polymer spheres having an accurately known diameter corresponding to the desired thickness of a liquid crystal layer in a liquid crystal light valve are dispersed in an optical cement. The cement with the polymer spheres dispersed therein is applied and hardened around the periphery of an electrode layer formed on a protective face plate, thereby automatically providing the desired thickness or spacing for the liquid crystal layer and sealing the liquid crystal layer against oxygen and moisture diffusion.

*Fig.5.*

## SPACING AND SEALING ARRANGEMENT FOR LIQUID CRYSTAL LIGHT VALVE

### BACKGROUND OF THE INVENTION

#### Field of the Invention

The present invention generally relates to the field of electro-optical liquid crystal devices, and more specifically to a method of spacing and sealing in the manufacture of liquid crystal light valves.

#### Description of the Related Art

The liquid crystal light valve (LCLV) is an optical-to-optical image transducer that is capable of accepting a low-intensity visible light image and converting it, in real time, into an output image with light from another source. A general description of the applications of LCLV technology is presented in a paper entitled "Progress in Liquid Crystal Light Valves", by W. P. Bleha, Laser Focus/Electro-Optics, Oct. 1983, pp. 111-120.

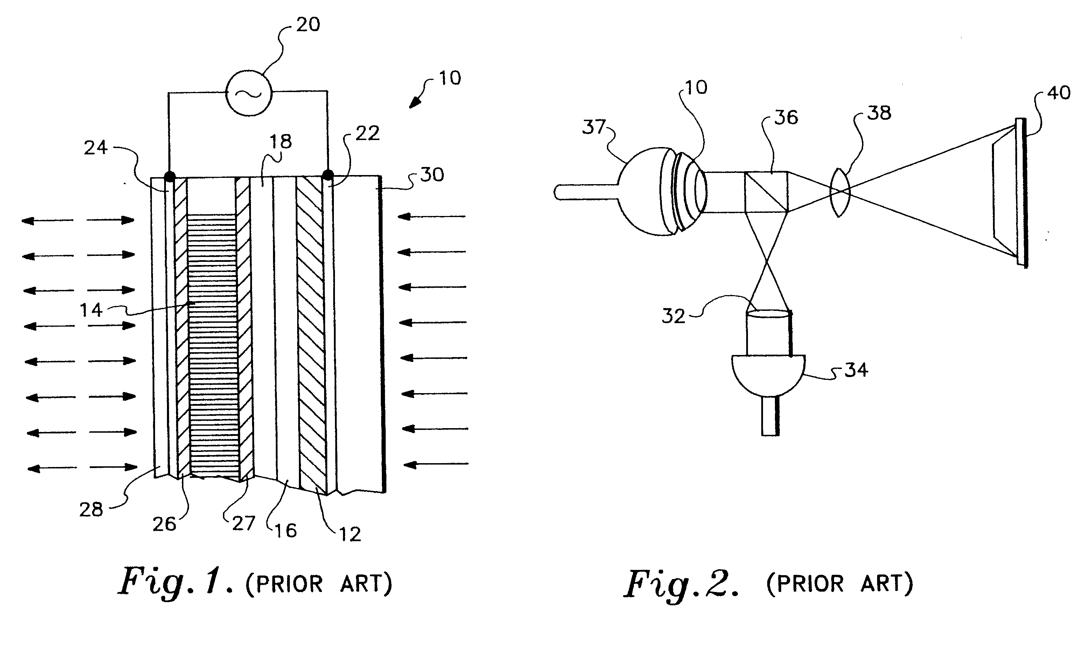

A generic LCLV is generally designated by the reference numeral 10, as viewed in Figure 1, which is a fragmentary section through an edge portion of the device. The LCLV 10 comprises a CdS or silicon photoconductor layer 12 and a nematic (normally transparent) liquid crystal layer 14 separated by a light blocking layer 16 and a dielectric mirror layer 18. The photoconductor layer 12 acts as an imaging, light-controlled voltage modulator for the liquid crystal layer 14. For real-time response, the liquid crystal layer 14 is 2-10 micrometers thick. In the thin-film sandwich, the broad-spectral-band dielectric mirror 18 serves to reflect the modulated readout light, and the light-blocking layer 16 prevents residual read-out light from reaching the photoconductor layer 12.

In response to the input light pattern, the impedance of the photoconductor layer 12 lowers and the voltage applied by a bias voltage source 20 between a transparent conductive electrode layer 22 and a transparent conductive counter electrode layer 24 is switched to the liquid crystal layer 14. This drives the liquid crystal layer 14 above its electro-optic threshold in a pattern that replicates the input image intensity, including grey-scale levels. Typical operating voltage levels are 10 V rms at 10 kHz.

As will be described in detail below, the light valve 10 further comprises liquid crystal alignment film layers 26 and 27 formed on the opposite surfaces of the liquid crystal layer 14, and transparent protective substrate face plates 28 and 30. Face plates 28 and 30 are made of optical glass flats or fiberoptics, and sandwich the liquid crystal and associated assembly layers therebetween to provide coupling between input and output light.. The transparent electrode layers 22 and 24 are typically made of indium tin oxide (ITO).

A typical optical system for use of the liquid crystal light valve 10 in a large-screen display application is illustrated in Figure 2. An optical system 32 collimates light from a xenon arc lamp 34 and directs it to a beam splitter 36, where it is polarized. The beam splitter 36 directs the light beam to the light valve 10 where it is phase-modulated with the image information from a cathode ray tube display 37 by the liquid crystal layer 14. The light is then reflected by the light valve dielectric mirror 18 back to the beam splitter 36, which now acts as an analyzer to create an intensity image. Finally, a projection lens 38 focusses the image on a distant screen 40.

Liquid crystal light valves are widely utilized in applications which involve severe high and low temperature storage conditions. It is therefore desirable to maximize the operating lifetime and stability of the devices. It is required to very accurately control the spacing or thickness of the liquid crystal layer during fabrication to provide the necessary operating tolerances. Both of these functions have been difficult and expensive to achieve with existing technology.

Liquid crystal layers used in LCLV's have often not been sealed. The face plates 28 and 30 are optical flats with extremely precise surfaces, which cause the liquid crystal material therebetween to be retained by capillary action. However, unsealed LCLV's suffer from limited lifetime due to diffusion of oxygen and moisture into the liquid crystal material. In addition, the volatile components of the liquid crystal material become progressively depleted due to evaporation. All of these effects result in degradation of the photostability of the LCLV and are accelerated by the high temperature conditions under which the LCLV's may operate. The xenon arc lamp 34 which is used in the projection system, for example, operates at a power level of 400 to 1600. watts, causing heating of the LCLV. In spite of the obvious desirability of sealing liquid crystal layers in LCLV's, such layers have remained unsealed due to the difficulty in obtaining thickness control of the LC layer 14.

Various techniques have been applied to the sealing of liquid crystal displays in watches, etc., as well as LCLV's. These include applying an adhesive to the peripheral areas of the face plates surrounding the liquid crystal material using silk screening, and heating the adhesive to cause fusion. A variation on this basic method is to apply a flexible film coated with, an adhesive film which melts and fuses to the face plates upon application of heat. A reference to this general arrangement is found in U.S. Patent no. 4,093,357 to Jacobson et al.

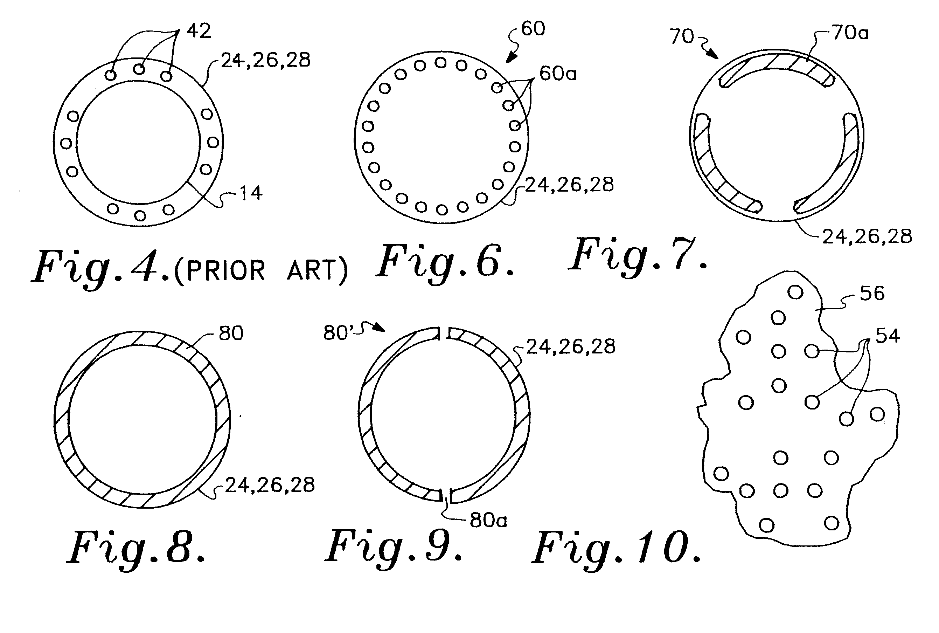

In addition to preventing degradation of the liquid crystal material in LCLV's, the liquid crystal layer must be of precise thickness. One method of providing thickness control is by forming a number of small, hard spacer pads 42 made of silicon or $SiO_x$ distributed in an even pattern on the periphery of the face plate 28 as illustrated in Figure 4. The disadvantage of this arrangement is that spacer pads 42 having a thickness in excess of approximately 6 micrometers are very time consuming and expensive to form. Further, the spacer pads 42 are too small and spaced at too large intervals to provide any sealing function. U.S. Patent no. 4,114,991 to Bleha et al shows a general arrangement of this type.

In recent years fiber spacer rods and polymer spheres have become commercially available with accurately known diameters. They range between 2 and 25 micrometers in thickness (diameter) and are therefore well suited for the spacing of ordinary liquid crystal displays, as previously practiced in the art, merely by dispersing the spacers in the liquid crystal material. In high resolution displays using liquid crystal light valves, however, the spacers can not be doped into the bulk liquid crystal material since they would be visible on the screen. This particular expedient is found in U.S. Patent no. 4,470,668 to Inoue et al.

## SUMMARY OF THE INVENTION

A purpose of the present invention is to provide a simple and low cost spacing and sealing method for liquid crystal light valve fabrication which substantially increases the operating lifetime and stability of the device under extreme high and low temperature conditions, and retains all of the components of the liquid crystal assembly within the device at a wide range of vapor pressures.

Another purpose of the present invention is to provide a spacing and sealing method for liquid crystal light valve fabrication which automatically establishes accurate spacing of the liquid crystal layer in the device, effectively seals the device against diffusion of oxygen and moisture into the device during and after fabrication, enables precise thickness control merely through selection of polymer spheres of the desired thickness, and utilizes polymer spheres having an accurately predetermined diameter in a novel manner.

The invention also includes a liquid crystal light valve fabricated in accordance with the present method.

In accordance with the present invention, polymer spheres are dispersed in an optical adhesive or cement. The spheres have an accurately known diameter corresponding to the desired thickness of a liquid crystal layer in a liquid crystal light valve. The cement with the polymer spheres dispersed therein is applied around the peripheries of facing surface members which retain the liquid crystal layer, thereby automatically providing the desired thickness or spacing for the liquid crystal layer and sealing the device against oxygen and moisture diffusion into the liquid crystal light valve.

The above and other features and advantages of the present invention will be apparent to those skilled in the art from the following detailed description, taken together with the accompanying drawings, in which like reference numerals refer to like parts.

## DESCRIPTION OF THE DRAWINGS

Figure 1 is a fragmentary sectional view illustrating the structure and operation of a conventional liquid crystal light valve;

Figure 2 is a diagram illustrating the use of a liquid crystal light valve in a large-screen, high-resolution, optical image projection application;

Figure 3 is a fragmentary sectional view illustrating a prior art spacing arrangement for the liquid crystal light valve;

Figure 4 is a plan view which further illustrates the prior art spacing arrangement shown Figure 3;

Figure 5 is a fragmentary sectional view illustrating a novel spacing and sealing arrangement for liquid crystal light valve fabrication embodying the present invention;

Figures 6 and 7 are diagrams illustrating alternate arrangements for spacing;

Figures 8 and 9 are diagrams illustrating the sealing of liquid crystal light valves in accordance with the present invention; and

Figure 10 is a fragmentary plan view illustrating the distribution of spheres in the spacing and sealing arrangements of Figures 6 to 9.

## DETAILED DESCRIPTION OF THE INVENTION

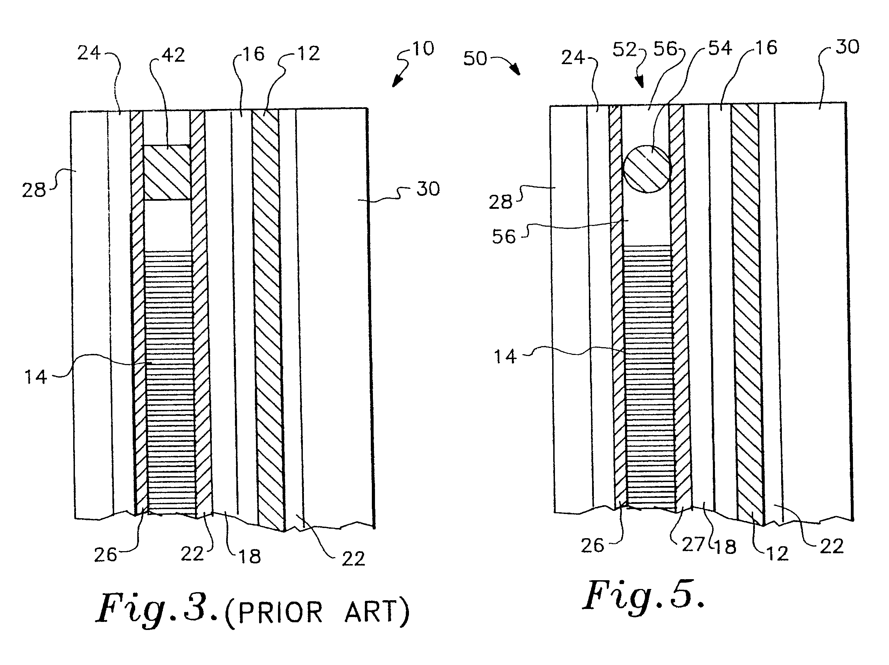

A liquid crystal light valve fabricated in accordance with the present invention is illustrated in Figure 5 and designated by the reference numeral 50, with component elements designated by the same reference numerals used in Figures 1 to 4. The LCLV 50 is generally disk shaped as shown in Figure 2, with only an edge portion of the LCLV 50 being illustrated in section in Figure 5. The novel feature of the present invention involves replacing the spacer pads 42 of the prior art with a sealing spacer 52 which comprises a plurality of polymer spheres 54 of uniform diameter imbedded in an optical cement or adhesive 56, the cement being hardened onto the peripheral surface of the alignment layer 26 which is formed on the face plate 28. The spheres 54 are substantially flush with the facing surfaces of the alignment layers 26 and 27, thereby providing automatic and highly accurate spacing of the liquid crystal layer 14. The cement 56 in combination with the spheres 54 effectively seals the edges of the liquid crystal layer 14 against inward diffusion of oxygen and moisture during and after fabrication. The thickness of the liquid crystal layer 14 may be precisely controlled by the selection of polymer spheres 54 having the desired thickness.

The method of fabricating a liquid crystal light valve in accordance with the present invention comprises the following steps.

(a) Provide the transparent plates 28 and 30 consisting, for example, of circular optical glass flats.

(b) Form the transparent electrode layers 24 and 22 on surfaces of the transparent plates 28 and 30 respectively. The alignment layers 26 and 27 may or may not be required in the fabrication of a particular LCLV. If required, the alignment layer 26 is formed on the electrode layer 24 at this time.

(c) Form the photoconductive layer 12, light blocking layer 16, dielectric mirror layer 18, and alignment layer 27 if required on the electrode layer 22.

(d) Place a thin coating of the uncured adhesive/spacer mixture on a peripheral edge portion of the electrode layer 24. If the alignment layer 26 is provided, the sealing spacer 52 will be formed on the alignment layer 26 which overlies the electrode layer 24.

(e) Press the first and second face plates 28 and 30 together with the uncured sealing spacer 52 contacting the dielectric mirror layer 18 (through the alignment layer 27 if provided) to compress down to the thickness of the spheres 54.

(f) Cure the adhesive/spacer combination by photo or thermal processing to form the sealing spacer 52 which binds tightly together the two parts of the LCLV.

(g) Fill the space defined within the sealing spacer 52 with liquid crystal material.

A method of filling the LCLV with liquid crystal material to accomplish step (g), is to form the sealing spacer 52 in the method described below in which one gap exists, between the space defined within the sealing spacer 52 and the atmosphere. The LCLV assembly and liquid crystal are placed in a vacuum chamber, evacuated, and then the unfilled sealed LV at the gap contacted with the liquid crystal material. Fill the vacuum chamber to atmospheric pressure, thereby forcing the liquid crystal material into the evacuated space through the opening to fill the space. Finally, the opening or gap is sealed by, for example, a polymer or metal plug.

If desired, the opening may be formed through one of the face plates 28 and 30, rather than through the sealing spacer 52.

Although any liquid, gel, or solid adhesive or cement which is capable of being thermally or ultraviolet cured is embraced by the scope of the invention, an optical cement which is inert to liquid crystal material and is ultraviolet curable is preferred. An example of a commercially available cement is Norland NOA61 optical cement. A preferred material for the spheres is Epostar GP-100 balls made of benzoguanamine which are available from EM Industries of Hawthorn, New York. The spheres are dispersed by mechanical mixing in the cement at a volume ratio of 0.1% to 3%.

The configuration of a demountable LV spacer 52 is determined in accordance with this method by a typical backfilling technique, in which step (c) above includes applying the cement 56 in liquid form with the spheres 54 dispersed therein onto the peripheral area of the electrode layer 24 (or onto the overlying alignment layer 26 if provided) on the face plate 28. A release plate or block (not shown) coated with a material to which the cement 56 does not adhere is pressed onto the face plate 28 so that the cement 56 is compressed down to the thickness of the spheres 54. The cement 56 is then cured or hardened through exposure to ultraviolet radiation, and the release member removed to leave the finished spacer 52.

The sealing spacer 52 may be provided in a number of different configurations, as shown in Figures 6 to 9. Figure 6 illustrates a spacer 60 formed on the periphery of the electrode 24 in the form of a plurality of small circular microdrops or dots 60a. There are many spheres 54 dispersed inside each dot 60a, as illustrated in Figure 10.

Figure 7 illustrates another spacer 70 comprising three equally spaced, relatively large arcuate sections 70a. Although the number of arcuate sections 70a is shown as being three, two or more than three sections may be provided.

Figure 8 illustrates another sealing spacer 80 in the form of a continuous circular arc, providing complete sealing, to be used with an opening through one of the face plates. Figure 9 illustrates a modification of the spacer of Figure 8, designated by the reference numeral 80', which is formed with a small gap 80a for removal of air and introduction of the liquid crystal by the back-filling method.

The following examples will illustrate implementation of a liquid crystal light valve with the present invention.

EXAMPLE 1

A 1 weight % of Epostar GP-50 (5 micrometers diameter) benzoguanamine resin based microspheres were dispersed in Norland NOA68 optical cement. A narrow ribbon of this mixture was placed on the perimeter of an ITO/SiO$_2$ alignment layer coated optical flat 0.5 inch thick and 2.5 inches in diameter), leaving a small gap for a filling hole, as shown in Figure 9. A second optical flat of the same type was placed on top and clamped together to limit the spacing to the microsphere size. The optical cement was cured with ultraviolet light for 10 minutes. This pre-sealed test cell was placed in a vacuum chamber above a liquid crystal container, and the system was evacuated. The glass test cell was lowered to contact the filling hole with the liquid crystal material, and the system was slowly back-filled with inert gas to atmospheric pressure, forcing the LC into the test cell's cavity. The filling gap was sealed with optical cement. Evaluation of this sealed LC cell showed uniform spacing and good liquid crystal alignment by macroscopic evaluation (no alignment degradation due to the sealing procedure).

EXAMPLE 2

A test cell was presealed with microspheres dispersed in Norland NOA68 optical cement, the same as in Example 1, but the liquid crystal was back-filled at 56°C temperature. The elevated temperature reduced the LC viscosity, improved its flow properties, and gave good liquid crystal surface alignment. The test cell's spacing was measured at three points prior to and after filling the cell with LC, resulting in average spacing of 4.5±0.1 and 4.3±0.5 respectively. The perimeter spacer/seal was pinhole free, since it passed a 144 hour vacuum test without leakage or deterioration. Surface alignment of the liquid crystal was very good, by macroscopic evaluation.

EXAMPLE 3

A liquid crystal light valve was presealed with controlled microsphere spacing, evacuated, back-filled with liquid crystal, and final sealed. This sealed LCLV showed excellent pinhole free sealing, good visual alignment quality and uniform electrical activation. The LV was fabricated from a photoconductor substrate (ITO/CdS photoconductor/light blocking layer/dielectric mirror/SiO$_2$/alignment layer coated optical flat) with an ITO/SiO$_2$/alignment layer coated counter electrode on optical flat (glass substrates same as in Example 1). The two substrates were clamped together, their spacing controlled by the 5 micron diameter polymer spheres dispersed in Norland NOA68 sealant placed around the perimeter of the counter electrode, leaving a small gap for filling. UV exposure, cell evacuation and back-filling was done in similar matter as in Example 1. Cell thickness and alignment uniformity was good, from visual observation between crossed polarizers. 120 hours of storage in a vacuum chamber showed no change in the cell, indicating a pinhole free seal. Electro-optical properties were evaluated with good results.

EXAMPLE 4

A 1% mixture of 10.0 micrometer diameter benzoguanamine (Epostar GP-100) balls having a diameter tolerance of 0.3 micrometers was dispersed in Norland NOA61 optical cement. Small drops of the mixture of approximately 2 mm in diameter were applied from a 5 microliter pipet onto an ITO (indium tin oxide) electrode and clamped with a polished plexiglass release block so that the cement was compressed down to the diameter of the balls. Ultraviolet radiation was applied to polymerize the cement and adhere it to the ITO electrode, but not to the plexiglass. After release of the plexiglass block, a relatively long secondary ultraviolet exposure of approximately 10 minutes was used to achieve good bonding strength.

An important application of the present invention is the fabrication of sealed liquid crystal light valves to improve the LCLV lifetime for storage and operation at elevated temperature. By presealing the liquid crystal light valves, vacuum filling them by means of an opening as described above with liquid crystal, and final sealing the displays under controlled atmospheric conditions, oxygen related liquid crystal photodecomposition and alignment degradation can be eliminated. The hermetically sealed cells will contain all liquid crystal components within the liquid crystal, regardless of their vapor pressure, and retain constant controlled liquid crystal composition at low or high temperatures, during storage or actual operation. The improved photostability of the liquid crystal material in sealed experimental test cells has been demonstrated and shown to result in lifetimes on the order of 3 to 4 times that of demountable control cells, using the same alignment technique and liquid crystal material.

While several illustrative embodiments of the invention have been shown and described, numerous variations and alternate embodiments will occur to those skilled in the art, without departing from the spirit and scope of the invention. Accordingly, it is intended that within the scope of the appended claims, the present invention may be practiced otherwise than as specifically described. For example, the polymer spheres may be replaced by other particles such as fibers or rods, although the spheres are preferred because there is less chance of crossover, there is no multiple stacking due to the round geometry, and no sharp edges are produced which would be visible as defects. As a further modification of the present invention within the scope of the disclosure, it is possible to utilize the method for either spacing or sealing, or both. As a yet further modification, the invention may be applied to a metal matrix type LCLV in which the dielectric mirror is replaced by a matrix of aluminum pads which cover approximately 80% of the back surface of the photoconductive layer. In this type of LCLV, the light blocking layer is omitted since ultraviolet readout light is used which does not affect the photoconductive layer.

**Claims**

1. A liquid crystal light valve including a liquid crystal means having a liquid crystal layer with a peripheral edge, a photoconductive layer, a mirror layer disposed between the liquid crystal means and the photoconductive layer, and first and second electrode layers having transparent areas disposed on outwardly facing surfaces of the liquid crystal means and the photoconductive layer respectively, characterized by comprising:
a spacer means disposed around the peripheral edge of the liquid crystal layer, the spacer means including a hardened mixture of an adhesive with particles of a predetermined thickness dispersed therein, the spacer means having a thickness which is substantially equal to the thickness of the particles.
2. A liquid crystal light valve as in claim 1, further comprising first and second plates which sandwich the liquid crystal means, photoconductive layer, mirror layer, first and second electrode layers, and spacer means therebetween.
3. A liquid crystal light valve as in claim 1, in which the liquid crystal means comprises a liquid crystal layer and first and second liquid crystal alignment layers formed on opposite surfaces of the liquid crystal layer, the spacer means being disposed between facing peripheral portions of the alignment layers.
4. A liquid crystal light valve as in claim 1, in which the spacer means comprises a plurality of substantially circular sections which are distributed around the peripheral edge of the liquid crystal layer.
5. A liquid crystal light valve as in claim 1, in which the spacer means comprises a plurality of elongated, substantially arcuate sections which are distributed around the peripheral edge of the liquid crystal layer.
6. A liquid crystal light valve as in claim 1, in which the spacer means comprises a substantially continuous circular arc extending around the peripheral edge of the liquid crystal layer.
7. A liquid crystal light valve as in claim 1, in which the adhesive comprises an optical cement.
8. A liquid crystal light valve as in claim 1, in which the adhesive comprises an ultraviolet light curable cement.
9. A liquid crystal light valve as in claim 1, in which the particles are spheres.
10. A liquid crystal light valve as in claim 9, in which the spheres comprise benzoguanamine.
11. A liquid crystal light valve as in claim 1, in which the particles are spheres made of a polymer material.
12. A liquid crystal light valve as in claim 11, in which the spheres are dispersed in the adhesive at a volume ratio of 0.1% to 3%.
13. A liquid crystal light valve as in claim 1, in which the particles are benzoguanamine spheres and the adhesive is an ultraviolet curable optical cement.
14. A method of liquid crystal light valve fabrication, comprising the steps of:
    (a) providing first and second plates;
    (b) forming first and second electrode layers on surfaces of the first and second plates respectively;
    (c) forming a photoconductive layer and mirror layer on the second electrode layer;
    (d) forming a spacer means on a peripheral portion of the first electrode layer, the spacer means including a mixture of an adhesive with particles of a predetermined thickness dispersed therein, a thickness of the spacer means being substantially equal to a thickness of the particles;
    (e) pressing the first and second plates together with the spacer means engaging the mirror layer; and
    (f) filling a space defined within the spacer means with liquid crystal material.
15. A method as in claim 14, further comprising the step, performed between steps (b) and (d), of:

(g) forming first and second liquid crystal alignment layers on the first and second electrode layers respectively, the spacer means being formed on the first alignment layer in step (d) and engaging with the second alignment layer in step (e).

16. A method as in claim 14, in which step (f) comprises applying a layer of the liquid crystal material onto the mirror layer prior to performing step (e).

17. A method as in claim 14, in which step (f) comprises providing an opening communicating with the space, causing liquid crystal material to flow through the opening to fill the space, and sealing the opening.

18. A method as in claim 14, in which the adhesive comprises ultraviolet curable cement, step (d) including dispersing the particles in the cement, applying the cement to the peripheral edge portion of the first electrode layer, pressing a releasable member onto the cement to compress the cement to substantially the thickness of the particles, applying ultraviolet radiation to cure the cement, and removing the releasable member from the cement.

19. A method as in claim l4, in which the adhesive comprises a curable cement which is uncured in steps (d) and (e), the method further comprising the step, performed between steps (e) and (f), of:

(g) curing the cement to harden the cement and thereby bind the first and second face plates together.

20. The method as in claim 19, in which the cement is ultraviolet curable, step (g) including applying ultraviolet light to the cement.

21. A method as in claim 14, in which the adhesive comprises an ultraviolet curable cement.

22. A method as in claim 14, in which the particles comprise spheres.

23. A method as in claim 22, in which the spheres comprise benzoguanamine polymer.

24. A liquid crystal light valve including a liquid crystal layer, characterized by comprising:
a spacer means disposed around a peripheral edge of the liquid crystal layer for establishing a predetermined thickness of the liquid crystal layer, the spacer means including a plurality of particles of said predeter mined thickness and retaining means for retaining the particles against movement relative to the liquid crystal layer.

25. A liquid crystal light valve including a liquid crystal layer, characterized by comprising:
a sealing and spacing means including an adhesive with particles of a predetermined thickness dispersed therein disposed around a peripheral edge of the liquid crystal layer, the particles establishing a thickness of the liquid crystal layer and the adhesive sealing the liquid crystal layer from the atmosphere.

26. A method of liquid crystal light valve fabrication, comprising the steps of:

(a) fabricating a liquid crystal light valve including a liquid crystal layer having a peripheral edge; and

(b) forming a spacer means including a hardened mixture of an adhesive with particles of a predetermined thickness dispersed therein around the peripheral edge of the liquid crystal layer, the spacer means having a thickness which is substantially equal to the thickness of the particles.

27. A method as in claim 26, in which the adhesive comprises an ultraviolet curable optical cement and the particles comprise polymer spheres.

*Fig.1.* (PRIOR ART)

*Fig.2.* (PRIOR ART)

EP 0 417 573 A2

Fig.3.(PRIOR ART)

Fig.5.

EP 0 417 573 A2

*Fig.4.* (PRIOR ART)    *Fig.6.*    *Fig.7.*

*Fig.8.*    *Fig.9.*    *Fig.10.*

EP 0 417 573 A2